## Europäisches Patentamt

## European Patent Office

## Office européen des brevets

(19) 

(11) Numéro de publication : **0 042 780**
**B1**

(12) **FASCICULE DE BREVET EUROPÉEN**

(45) Date de publication du fascicule du brevet :
**09.01.85**

(51) Int. Cl.⁴ : **G 01 H 13/00**

(21) Numéro de dépôt : **81400929.6**

(22) Date de dépôt : **12.06.81**

(54) **Dispositif de mesure des fréquences de résonnance des aubes de turbines, de compresseurs et de pales d'hélices.**

(30) Priorité : **24.06.80 FR 8013935**

(43) Date de publication de la demande :
**30.12.81 Bulletin 81/52**

(45) Mention de la délivrance du brevet :
**09.01.85 Bulletin 85/02**

(84) Etats contractants désignés :
**CH DE FR GB LI**

(56) Documents cités :
**DE-A- 2 814 576**
**DE-B- 1 117 913**
**US-A- 3 600 934**
**REVIEW OF SCIENTIFIC INSTRUMENTS, vol. 47, no. 9, septembre 1976 NEW YORK (US) A. KLIMASARA et al.: "Automated resonance-bar damping measurement system", pages 1163-1166**

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **Fournier, Jacques Maurice Armand**
**6, rue Marceau**
**F-92320 Chatillon (FR)**

(74) Mandataire : **Moinat, François et al**
**S.N.E.C.M.A. Service des Brevets Boîte Postale 81**
**F-91003 Evry Cedex (FR)**

Jouve, 18, rue St-Denis, 75001 Paris, France

## Description

La présente invention a pour objet un dispositif de mesure des fréquences de résonances des aubes de turbines, de compresseur et de pales d'hélices.

Dans un moteur, les pales du rotor en rotation subissent des excitations dans une très grande plage de fréquences. De ce fait, les pales peuvent entrer en résonance et l'amplitude de l'oscillation peut atteindre des valeurs destructrices.

La connaissance de la valeur précise de ces fréquences de résonance sur les différents modes permet, en appliquant les remèdes adéquats, d'en minimiser les effets néfastes.

Suivant un procédé connu, la pale est fixée rigidement par son embase et elle est excitée au niveau de sa base à l'aide d'un générateur de son, notamment un haut-parleur.

La résonance de la pale est détectée, à son sommet, à l'aide d'un capteur de déplacement (notamment un transducteur magnétique ou optique). Ce capteur fournit la fréquence et l'amplitude de la résonance de la pale. La recherche du maximum s'effectue en faisant varier la fréquence du signal d'excitation et en mesurant corrélativement son amplitude au niveau du capteur de déplacement. L'inconvénient d'une telle méthode réside d'une part, dans sa relative lenteur et d'autre part, dans sa faible précision. En effet, aux alentours de la fréquence de résonance, la courbe d'amplitude varie très peu et la recherche du maximum s'avère délicate si l'on veut une bonne précision.

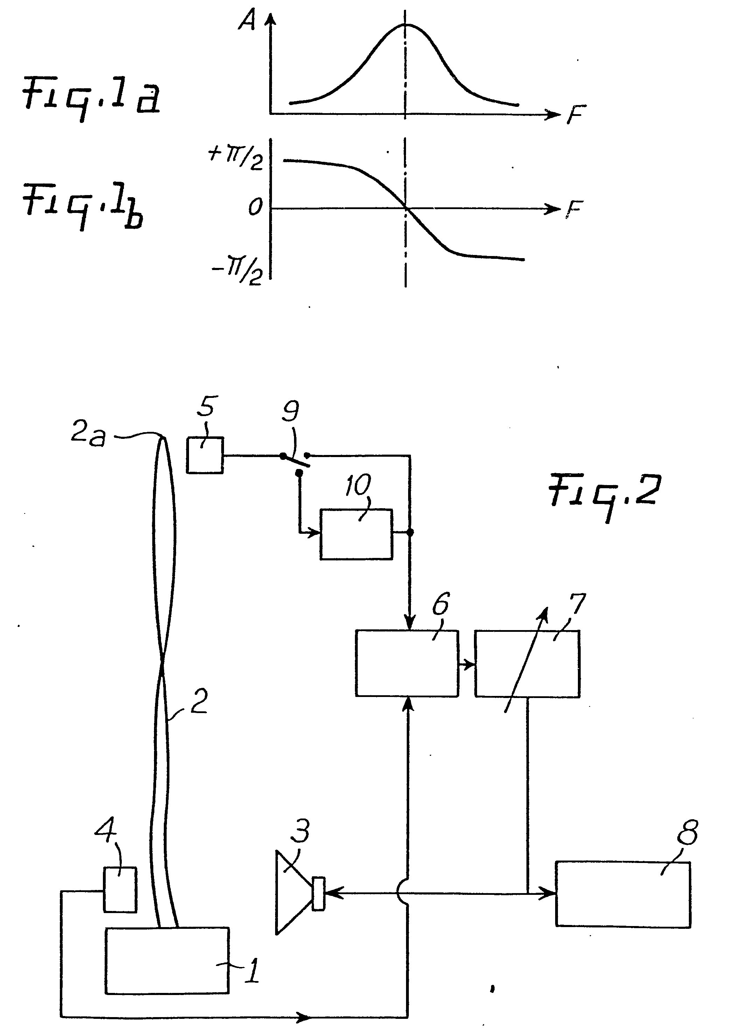

Par ailleurs, on sait que l'oscillation mécanique ou électrique d'un corps est caractérisée par deux courbes qui sont représentées aux figures 1a et 1b.

Sur la figure 1a on a représenté la courbe de l'amplitude de A en fonction de la fréquence F qui est utilisée dans le procédé mentionné ci-dessus.

Sur la figure 1b on a représenté la courbe de l'écart entre la phase de vibration (électrique ou mécanique) du corps excité et la phase du signal excitateur pris dans le plan d'excitation.

Ainsi qu'il est visible à la figure 1b, cette courbe présente la particularité de passer par zéro à la fréquence de résonance et c'est de surcroît l'endroit où sa pente est la plus accentuée.

Sur la base de cette particularité, il a déjà été proposé de réaliser un dispositif d'excitation dont la fréquence est commandée par le critère de phase mentionné ci-dessus. On se reportera notamment à l'article « Automated resonance-bar damping measurement system » publié aux pages 1 163 à 1 166 de la « REVIEW OF SCIENTIFIC INSTRUMENTS » vol. 47 n° 9 de septembre 1976 qui décrit un système pour mesurer des paramètres de vibration d'un échantillon, lequel système comporte un discriminateur de phase fournissant un signal d'erreur contrôlant la fréquence d'excitation de l'échantillon, ledit signal d'erreur étant représentatif de la différence entre les phases du signal de vibration détecté et d'un signal de référence constitué par la fréquence d'excitation. Ainsi le système connu maintient la fréquence d'excitation à la valeur de la fréquence de résonance de l'échantillon par l'intermédiaire d'une boucle d'asservissement.

Toutefois, dans un tel dispositif, c'est la phase de l'oscillateur qui est prise en compte et non la phase réelle d'oscillation. Il serait nécessaire d'introduire une correction de la fonction de transfert.

La présente invention a précisément pour objet un dispositif de mesure des fréquences de résonance des aubes, ou pales, du genre comportant un socle dans lequel l'aube est fixée rigidement à sa base, un générateur de son par lequel l'aube est excitée au niveau de sa base, un oscillateur alimentant le générateur de son, un capteur de déplacement disposé à proximité du sommet de l'aube et un fréquencemètre permettant de mesurer la fréquence de l'oscillateur. Conformément à l'invention, ce dispositif comprend au moins un capteur phonique disposé au niveau de la base de l'aube et le signal reçu du capteur de déplacement est appliqué sur l'une des entrées d'un discriminateur de phase dont l'autre entrée reçoit, comme phase de référence, le signal de sortie du capteur phonique, la tension d'erreur d'erreur délivrée par le discriminateur commandant la fréquence de l'oscillateur de façon que celle-ci atteigne une valeur d'équilibre représentant la fréquence de résonance cherchée de l'aube.

Ce dispositif permet de mesurer avec précision les fréquences de résonance des aubes, ou pales, d'une manière très rapide, contrairement aux dispositifs connus qui nécessitent un temps relativement long.

D'autres caractéristiques et avantages de l'invention seront mieux compris à la lecture de la description qui va suivre d'un exemple de réalisation et en se référant aux dessins annexés, sur lesquels :

Les figures 1a, 1b sont des vues des courbes caractérisant l'oscillation mécanique ou électrique d'un corps.

La figure 2 est une vue d'un schéma du dispositif de mesure des fréquences de résonance d'une pale suivant l'invention.

La figure 3 est une vue d'un schéma d'une variante de réalisation du dispositif suivant l'invention.

Les figures 4 à 4b sont des vues d'une pale soumise à plusieurs modes d'oscillation.

La figure 5 est une vue schématique du montage d'un haut-parleur en regard d'une pale et de deux capteurs phoniques.

La figure 6 est une vue schématique du montage d'un haut-parleur en regard d'une pale et d'un capteur phonique.

A la figure 2 on a représenté un schéma d'un mode de réalisation du dispositif de mesure des fréquences de résonance d'une pale ou d'une aube. Ce dispositif comprend un socle 1 de masse importante sur lequel est fixée solidement et rigidement une pale ou une aube de turbine 2 qui est excitée au niveau de sa base à l'aide d'un générateur de son 3, notamment un haut-parleur.

Sur le socle 1, est fixé un capteur phonique 4 dans le plan d'excitation X-X1 de la pale (figure 6) et au niveau de la base de la pale.

Un autre capteur 5 du type à déplacement (magnétique ou optique) est disposé à proximité du sommet 2a de la pale et il est relié à l'une des entrées d'un discriminateur de phase 6 dont l'autre entrée est reliée au capteur phonique 4.

La phase du capteur 4 est prise comme référence du signal d'excitation qui est appliqué à l'une des entrées du discriminateur de phase 6, alors que l'autre capteur 5 envoie le signal reçu sur l'autre entrée du discriminateur de phase. La tension d'erreur délivrée par le discriminateur de phase 6 commande la fréquence d'un oscillateur 7 auquel il est relié et dont le signal est envoyé sur l'excitateur 3. L'oscillateur 7 est également relié à un fréquencemètre 8 qui permet de mesurer la fréquence de l'oscillateur 7 lorsque le système atteint l'équilibre. Entre le capteur 5 et le discriminateur de fréquence 6 est branché par l'intermédiaire d'un contacteur 9 un déphaseur 10 qui permet d'introduire à volonté un déphasage de 180° agin de sélectionner les différents modes d'oscillation de la pale.

La phase du capteur 4 au niveau du socle est prise comme référence du signal d'excitation.

Par définition, cette référence est la phase du signal d'excitation dans le plan de la pale 2 (figure 6). Si l'on prenait comme référence la phase à la sortie de l'oscillateur, il faudrait introduire une correction de phase relative à la fonction de transfert du générateur de son 3 (haut-parleur) et à la distance de celui-ci de la pale 2. Or, la fonction de transfert d'un générateur de son, notamment d'un haut-parleur est très tourmentée et dépend fortement de la présence à proximité, d'un élément réflecteur, en l'occurrence la pale 2, qui crée des ondes stationnaires.

La connaissance des caractéristiques de l'ensemble générateur de son — espace d'excitation — est donc trop complexe pour être appréhendée avec la précision requise. Il est donc plus simple de relever la phase de référence dans le plan d'excitation à l'aide de capteurs qui sont eux des appareils de mesure, dont les fonctions de transfert sont parfaitement connues.

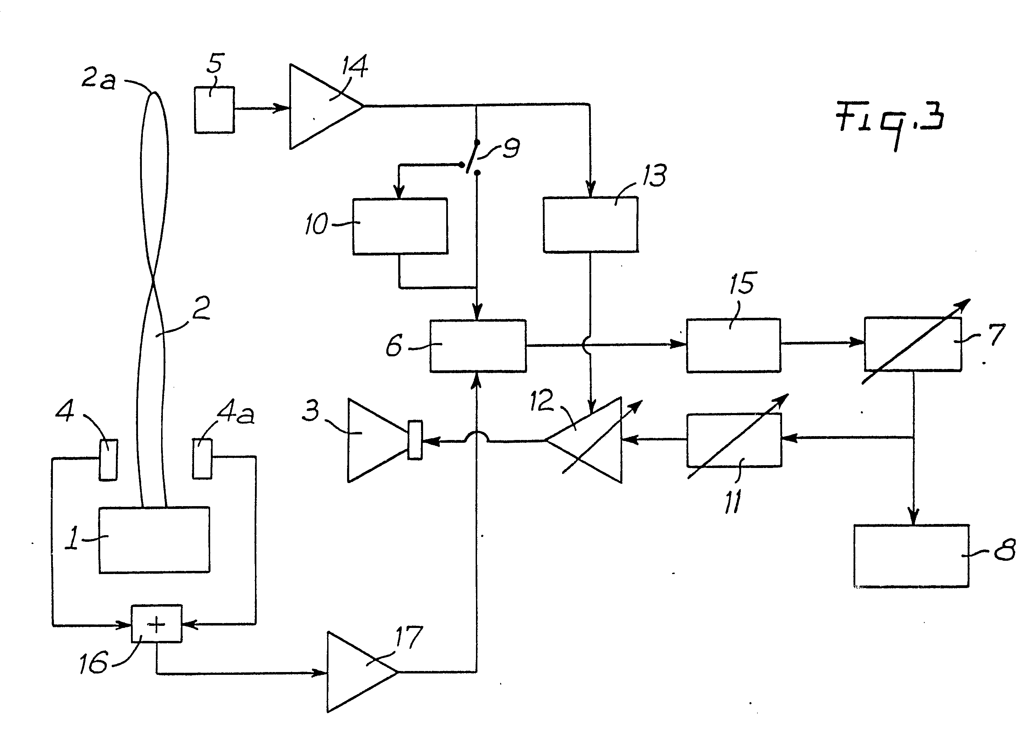

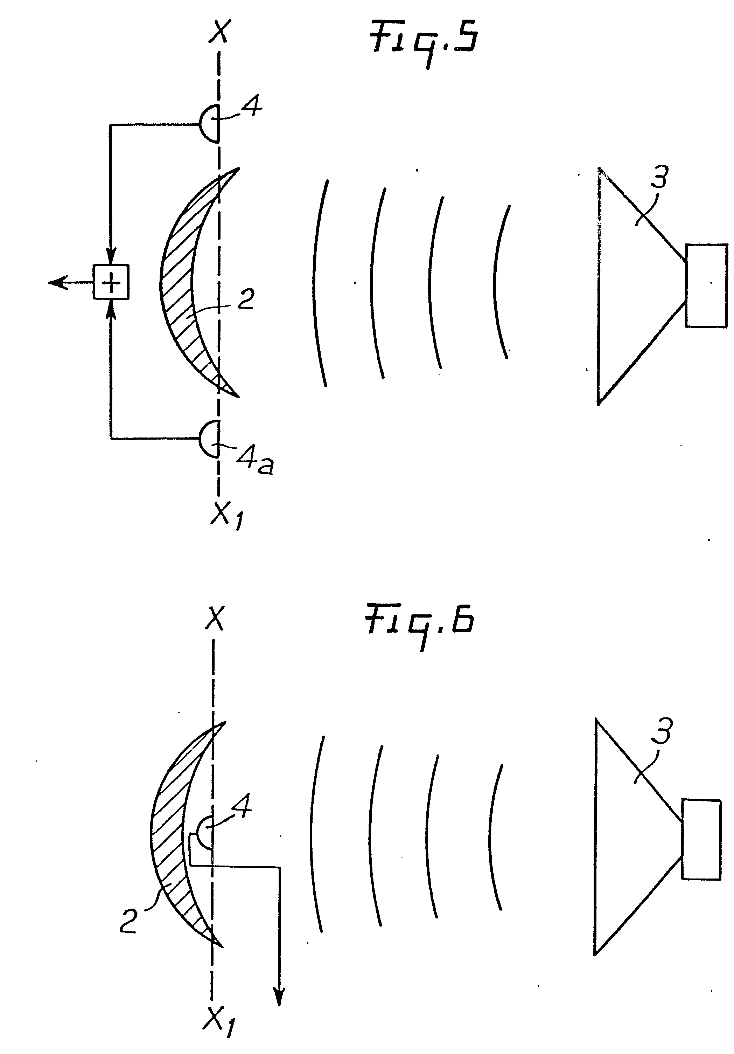

A la figure 3, on a représenté un autre mode de réalisation du dispositif de mesure des fréquences de résonance suivant l'invention, dans lequel on utilise deux capteurs phoniques 4, 4a disposés de part et d'autre de la pale 2 dans son plan moyen d'excitation X-X1 (figure 5).

Cette disposition est destinée à permettre, lorsque la base de la pale n'est pas un plan réel, comme cela est très souvent le cas, de mieux définir le plan d'excitation équivalent en effectuant la moyenne des signaux reçus par les deux détecteurs.

Les deux capteurs phoniques 4, 4a sont reliés à un moyen 16 délivrant un signal de référence qui est égal à la moyenne des deux signaux des capteurs, ledit signal de référence étant amplifié par un amplificateur 17 avant d'être appliqué à l'entrée du discriminateur de phase 6.

Lorsque la pale est très creuse, il est possible de prélever le signal de référence à l'aide d'un seul détecteur acoustique 4 situé, si la dimension le permet, au centre de la pale 2 (figure 6).

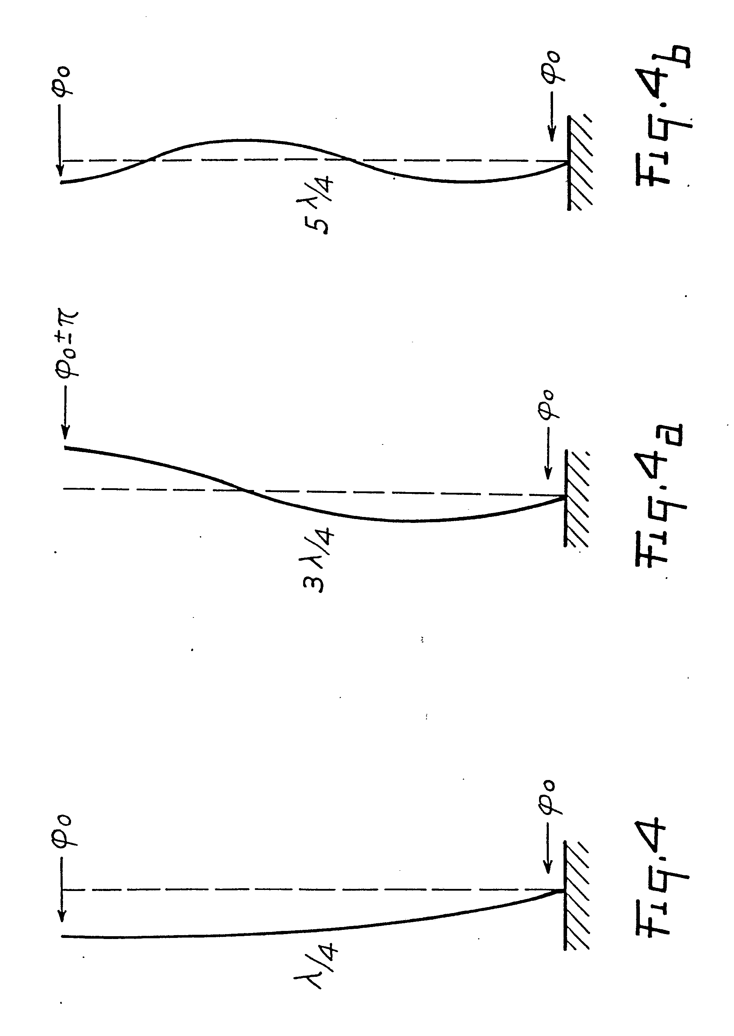

Dans le cas de la figure 3 l'excitateur phonique 3 est alimenté par l'intermédiaire d'un filtre 11 afin de sélectionner le mode d'oscillation désiré. Celui-ci est toujours impair mais il peut être égal à 1 (figure 4), à 3 (figure 4a) et à 5 (figure 4b). Comme on le voit sur les figures 4 et 4a, si la différenciation entre l'oscillation λ/4 et 3 λ/4 peut être faite à l'aide de la phase en bout de pale (différence de 180°) celle (figures 4 et 4b) entre l'oscillation en λ/4 et 5 λ/4 ne peut être effectuée qu'à l'aide d'un filtre qui empêche toute énergie de franchir la boucle en dehors de la plage où peut se situer l'oscillation.

Entre le filtre 11 et l'excitateur 3 est branché un amplificateur 12 dont le gain est commandé par le signal de sortie du capteur 5 par l'intermédiaire d'un dispositif 13 de contrôle automatique de gain, un amplificateur 14 étant branché à la sortie du capteur 5 et alimentant le dispositif de contrôle automatique de gain ainsi que le discriminateur de phase 6.

En effet, les pales soumises à la mesure ont des morphologies différentes et donc des coefficients de surtension différents. D'autre part, cette même surtension est aussi différente suivant le rang d'oscillation considéré et enfin le dispositif d'excitation (haut-parleur) possède un rendement évoluant de façon non négligeable avec la fréquence. Par ailleurs, il faut limiter l'élongation en bout de pale 2a qui pourrait atteindre des valeurs dangereuses et conduire notamment à la rupture de l'aube.

Ce dispositif permet donc de travailler à élongation constante en adaptant automatiquement le niveau d'excitation de l'excitateur phonique (haut-parleur) à une valeur adéquate qui prend en compte tous les paramètres mentionnés ci-dessus.

Il est également prévu entre le discriminateur de phase 6 et l'oscillateur 7 un intégrateur 15 qui a pour but de filtrer le signal d'erreur et de stabiliser la boucle d'asservissement.

**Revendications**

1. Dispositif de mesure des fréquences de résonance des aubes de turbines, de compresseurs et de pales d'hélices, comportant un socle (1) dans lequel la pale où l'aube (2) est fixée rigidement à sa base, un générateur de son (3) par lequel la pale où l'aube est excitée au niveau de sa base, un oscillateur (7) alimentant le générateur de son, un capteur de déplacement (5) disposé à proximité du sommet de la pale ou de l'aube et un fréquencemètre (8) permettant de mesurer la fréquence de l'oscillateur, caractérisé en ce qu'il comprend au moins un capteur phonique (4) disposé au niveau de la base de la pale (2) ou de l'aube et en ce que le signal reçu du capteur de déplacement (5) est appliqué sur l'une des entrées d'un discriminateur de phase (6) dont l'autre entrée reçoit comme phase de référence le signal de sortie du capteur phonique (4), la tension d'erreur délivrée par le discriminateur (6) commandant la fréquence de l'oscillateur (7) de façon que celle-ci atteigne une valeur d'équilibre représentant la fréquence de résonance cherchée de la pale ou de l'aube.

2. Dispositif suivant la revendication 1, caractérisé en ce qu'entre le capteur de déplacement (5) et le discriminateur de phase (6) est branché sélectivement un déphaseur (10) sélectionnant les différents modes d'oscillation de la pale ou de l'aube.

3. Dispositif suivant la revendication 1, caractérisé en ce que le capteur phonique (4) est disposé dans le plan moyen d'excitation de la pale.

4. Dispositif suivant la revendication 1, caractérisé en ce qu'il comporte un capteur phonique (4a) additionnel, les deux capteurs phoniques (4, 4a) étant disposés de part et d'autre de la pale ou de l'aube (2) dans le plan moyen d'excitation de celle-ci, lesdits capteurs étant reliés à un moyen (16) délivrant un signal de phase de référence qui est égal à la moyenne des deux signaux des capteurs.

5. Dispositif suivant la revendication 1, caractérisé en ce que le générateur de son (3) est alimenté par l'intermédiaire d'un filtre (11) et d'un amplificateur (12) dont le gain est commandé par le signal de sortie du capteur de déplacement (5).

6. Dispositif suivant la revendication 5, caractérisé en ce qu'entre le capteur de déplacement (5) et l'amplificateur (12) alimentant le générateur de son (3) sont branchés en série un amplificateur (14) et un dispositif de contrôle automatique de gain (13).

7. Dispositif suivant la revendication 1, caractérisé en ce qu'entre le discriminateur de phase (6) et l'oscillateur (7) est branché un intégrateur (15).

8. Dispositif suivant l'une quelconque des revendications 1, 3 ou 5 caractérisé en ce que le capteur phonique (4) est relié au discriminateur de phase (6) par l'intermédiaire d'un amplificateur (17).

## Claims

1. Device for the measurement of the resonant frequencies of blades of turbines, compressors and helical screw machines, comprising a socket (1) in which the vane or the blade (2) is rigidly secured at its base, a sound generator (3) by which the vane or the blade is excited in the region of its base, an oscillator (7) supplying the sound generator, a displacement sensor (5) disposed adjacent to the tip of the vane or of the blade and a frequency meter (8) enabling measurement of the frequency of the oscillator, characterized in that it comprises at least one acoustic sensor (4) disposed in the region of the base of the vane (2) or of the blade and in that the signal received from the displacement sensor (5) is supplied to one of the inputs of a phase discriminator (6) of which the other input receives as a reference phase the output signal of the acoustic sensor (4), the error voltage delivered by the discriminator (6) controlling the frequency of the oscillator (7) in such a manner that the latter achieves an equilibrium value representing the required resonant frequency of the vane or of the blade.

2. Device according to claim 1, characterized in that between the displacement sensor (5) and the phase discriminator (6) is connected selectively a phase shifter (10) selecting the different oscillation modes of the vane or of the blade.

3. Device according to claim 1, characterized in that the acoustics sensor (4) is disposed in the median excitation plane of the vane.

4. Device according to claim 1, characterized in that it comprises an additional acoustic sensor (4a), the two acoustic sensors (4, 4a) being disposed on either side of the vane or of the blade (2) in the median excitation plane of the latter, the said sensors being connected to means (16) supplying a reference phase signal which is equal to the average of the two signals of the sensors.

5. Device according to claim 1, characterized in that the sound generator (5) is supplied through the intermediary of a filter (11) and of an amplifier (12) of which the gain is controlled by the output signal of the displacement sensor (5).

6. Device according to claim 5, characterized in that an amplifier (14) and an automatic gain control device (13) are connected in series between the displacement sensor (5) and the amplifier (12) supplying the sound generator (3).

7. Device according to claim 1, characterized in that an integrator (15) is connected between the phase discriminator (6) and the oscillator (7).

8. Device according to any one of claims 1, 3 or 5 characterized in that the acoustic sensor (4) is connected to the phase discriminator (6) through the intermediary of an amplifier (17).

## Ansprüche

1. Vorrichtung zur Messung der Resonanzfrequenz von Turbinenschaufeln, von Kompressorschaufel und von Luftschraubenblättern mit einem Sockelteil (1), in welchem die Schaufel oder das Blatt (2) mit ihrer bzw. seiner Basis starr fixiert ist, mit einem Schallgenerator (3), durch den die Schaufel oder das Blatt in Höhe der Basis angeregt wird, mit einem Oszillator (7) zur Speisung des Schallgenerators, mit einem in der Nähe der Schaufel- oder Blattspitze angeordneten Wegaufnehmer (5) sowie mit einem Frequenzmesser zur Messung der Frequenz des Oszillators dadurch gekennzeichnet, daß in Höhe der Basis der Schaufel oder des Blatts (2) wenigstens ein Schallaufnehmer (4) angeordnet ist, daß das von dem Wegaufnehmer (5) empfangene Signal an einem der Eingänge eines Phasendiskriminators (6) anliegt, dessen anderem Eingang das Ausgangssignal des Schallaufnehmers (4) als Referenzphase zugeführt wird, und daß die von dem Phasendiskriminator (6) gelieferte Fehlerspannung die Frequenz des Oszillators derart nachsteuert, daß diese einen Gleichgewichtszustand erreicht, der die gesuchte Resonanzfrequenz der Schaufel bzw. des Blatts darstellt.

2. Vorrichtung nach Anspruch 1, dadurch gekennzeichnet, daß zwischen dem Wegaufnehmer (5) und dem Phasendiskriminator (6) wahlweise ein Phasenschieber (10) zur Auswahl der verschiedenen Schwingungsmoden der Schaufel oder des Blatts einfügbar ist.

3. Vorrichtung nach Anspruch 1, dadurch gekennzeichnet, daß der Schallaufnehmer (4) in der mittleren Erregungsebene der Schaufel angeordnet ist.

4. Vorrichtung nach Anspruch 1, dadurch gekennzeichnet, daß ein zusätzlicher Schallaufnehmer (4a) vorgesehen ist, daß die beiden Schallaufnehmer (4, 4a) zu beiden Seiten der Schaufel oder des Blatts (2) in der mittleren Erregungsebene derselben angeordnet sind und daß die Schallaufnehmer mit einem Schaltungsteil (16) verbunden sind, der ein Referenzphasensignal liefert. das dem Mittelwert der beiden Schallaufnehmersignale entspricht.

5. Vorrichtung nach Anspruch 1, dadurch gekennzeichnet, daß der Schallgenerator (3) über ein Filter (11) und einen Verstärker (12) gespeist wird, dessen Verstärkungsgrad von dem Ausgangsssignal des Wegaufnehmers (5) gesteuert wird.

6. Vorrichtung nach Anspruch 5, dadurch gekennzeichnet, daß zwischen dem Wegaufnehmer (5) und dem den Schallgenerator (3) speisenden Verstärker (12) in Reihenschaltung ein weiterer Verstärker (14) und eine Einrichtung (13) zur automatischen Steuerung des Verstärkungsgrads eingefügt sind.

7. Vorrichtung nach Anspruch 1, dadurch gekennzeichnet, daß zwischen dem Phasendiskriminator (6) und dem Oszillator (7) ein Integrator (15) eingefügt ist.

8. Vorrichtung nach einem der Ansprüche 1, 3 oder 5, dadurch gekennzeichnet, daß der Schallaufnehmer (4) mit dem Phasendiskriminator (6) über einen Verstärker (17) verbunden ist.

Fig.1a

Fig.1b

Fig.2

Fig.3

0 042 780

Fig.4     Fig.4a     Fig.4b

**Fig.5**

**Fig.6**